(19) Europäisches Patentamt
European Patent Office
Office européen des brevets

(11) **EP 3 560 094 B1**

(12) **EUROPÄISCHE PATENTSCHRIFT**

(45) Veröffentlichungstag und Bekanntmachung des Hinweises auf die Patenterteilung:
**24.01.2024 Patentblatt 2024/04**

(21) Anmeldenummer: **17836026.9**

(22) Anmeldetag: **21.12.2017**

(51) Internationale Patentklassifikation (IPC):
**H02P 9/30** *(2006.01)* **F02N 11/00** *(2006.01)*

(52) Gemeinsame Patentklassifikation (CPC):
**H02P 9/30; F02N 11/00; H02P 9/305**

(86) Internationale Anmeldenummer:
**PCT/EP2017/084005**

(87) Internationale Veröffentlichungsnummer:
**WO 2018/141463 (09.08.2018 Gazette 2018/32)**

(54) **REGELBARE SPANNUNGSERZEUGUNGSVORRICHTUNG**

CONTROLLABLE VOLTAGE GENERATING DEVICE

DISPOSITIF DE GÉNÉRATION DE TENSION RÉGULABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2017 DE 102017201687**

(43) Veröffentlichungstag der Anmeldung:
**30.10.2019 Patentblatt 2019/44**

(73) Patentinhaber: **Siemens Mobility GmbH**
**81739 München (DE)**

(72) Erfinder: **HOFFMANN, Wolfgang**
**91052 Erlangen (DE)**

(74) Vertreter: **Siemens Patent Attorneys**
**Postfach 22 16 34**
**80506 München (DE)**

(56) Entgegenhaltungen:
**EP-A2- 1 063 764 DE-A1- 19 733 221**
**US-A1- 2003 075 997**

**Beschreibung**

Die Erfindung betrifft eine regelbare Spannungserzeugungsvorrichtung.

Bekannt sind regelbare Spannungserzeugungsvorrichtungen zum Generieren einer elektrischen Spannung für Verbraucher. Dabei werden Spannungsregler und Stromregler verwendet, wobei Lastschwankungen mittels einer Kennlinie berücksichtigt werden können, wobei Parameter für die Kennlinie oft nur sehr aufwendig erhältlich sind, beispielsweise aus Datenblättern eines beteiligten Generators.

Aus der Druckschrift DE 197 33 221 A1 ist ein Verfahren zur Regelung eines Generators bekannt, bei dem die vom Generator gelieferte gleichgerichtete Ausgangsspannung unter bestimmten Voraussetzungen mit Hilfe eines Gleichspannungswandlers gewandelt wird. Der Generator kann dabei in freiem Betrieb oder in geregeltem Betrieb betrieben werden. Falls die im jeweiligen Betriebszustand abgegebene Generatorspannung nicht der Bordnetzspannung entspricht, wird die Generatorspannung mit Hilfe des Spannungswandlers entweder erhöht oder erniedrigt. Die Auswahl der Generatorbetriebsart erfolgt drehzahlabhängig oder spannungsabhängig so, dass die zur Verfügung stehende Generatorleistung oder der Wirkungsgrad der Energiewandlung möglichst hoch wird.

Es ist Aufgabe der vorliegenden Erfindung, eine verbesserte regelbare Spannungserzeugungsvorrichtung bereitzustellen.

Die Aufgabe wird gelöst mit einer regelbaren Spannungserzeugungsvorrichtung gemäß Anspruch 1.

Auf diese Weise kann vorteilhaft eine Störgrößenaufschaltung realisiert werden, mittels der Lastwechsel der Spannungserzeugungsvorrichtung auf dynamische Art und Weise ausregelbar sind. Eine aufwendige simulationstechnische Ermittlung einer Kennlinie der Ermittlungseinrichtung ist auf diese Weise nicht erforderlich. Dadurch ist eine Kenntnis von Parametern für eine Simulation der Kennlinie der Ermittlungseinrichtung nicht erforderlich. Zum messtechnischen Ermitteln der Erregersignale sind lediglich Arbeitspunkte anzufahren, die im Betrieb der Spannungserzeugungsvorrichtung ohnehin angefahren werden.

Auf diese Art und Weise kann eine mathematische Ermittlung der Kennlinie für die regelbare Spannungserzeugungsvorrichtung vorteilhaft messdatenbasiert durchgeführt werden. Aufwendige Modellbildungs- und Simulationsprozesse sind dadurch vorteilhaft nicht erforderlich.

Eine bevorzugte Ausführungsform der erfindungsgemäßen Vorrichtung zeichnet sich dadurch aus, dass der Ermittlungseinrichtung ein berechneter Leistungswert und ein Drehzahlsollwert der Generatoreinrichtung zuführbar ist, wobei mittels der Ermittlungseinrichtung ein Sollwert eines elektrischen Erregerstroms für eine Erregereinrichtung der Generatoreinrichtung ermittelbar ist. Dadurch kann das elektrische Erregersignal mit einer hohen Genauigkeit ermittelt werden.

Eine weitere bevorzugte Ausführungsform der Spannungserzeugungsvorrichtung zeichnet sich dadurch aus, dass der Ermittlungseinrichtung ein berechneter Leistungswert und ein Drehzahlsollwert der Generatoreinrichtung zuführbar ist, wobei mittels der Ermittlungseinrichtung ein Sollwert einer elektrischen Erregerspannung für eine Erregereinrichtung der Generatoreinrichtung ermittelbar ist. Auf diese Weise ist vorteilhaft wenig Zusatzaufwand für die Ermittlung des elektrischen Erregersignals in Form der Erregerspannung erforderlich.

Eine weitere bevorzugte Ausführungsform der Spannungserzeugungsvorrichtung zeichnet sich dadurch aus, dass die Generatoreinrichtung bei wenigstens zwei definierten Drehzahlen jeweils bei Leerlauf und bei Nennlast betreibbar ist, wobei ein Wert des elektrischen Erregerstroms oder der elektrischen Erregerspannung aus einer linearen Interpolation von vier dadurch erhaltenen Wertetripel ermittelbar ist, wobei ein Wertetripel aus Erregerstrom oder Spannung, Drehzahl und Last besteht. Auf diese Weise kann die mathematische Ermittlung des Erregersignals auf einfache Weise mit geringem rechnerischem Aufwand durchgeführt werden.

Eine weitere bevorzugte Ausführungsform der regelbaren Spannungsversorgungsvorrichtung zeichnet sich dadurch aus, dass zur Ermittlung der Wertetripel des elektrischen Erregerstroms oder der elektrischen Erregerspannung der Drehzahlbereich der Generatoreinrichtung in definierten Intervallen durchfahrbar ist. Auf diese Weise wird mit einer definierten Anzahl von Arbeitspunkten ein Drehzahlbereich der Generatoreinrichtung gleichmäßig abgefahren, wodurch das elektrische Erregersignal noch genauer ermittelt werden kann.

Eine weitere bevorzugte Ausführungsform der regelbaren Spannungserzeugungsvorrichtung zeichnet sich dadurch aus, dass mittels einer Hilfsregelungseinrichtung, an die ein Messwert der Ausgangsspannung der Gleichrichtereinrichtung und ein Sollwert der elektrischen Ausgangsspannung der Gleichrichtereinrichtung zuführbar ist, ein zweiter Sollwert des elektrischen Erregerstroms oder der elektrischen Erregerspannung ermittelbar ist, der zusammen mit dem von der Ermittlungseinrichtung bereitgestellten ersten Sollwert des elektrischen Erregerstroms oder der elektrischen Erregerspannung einen Sollwert des elektrischen Erregerstroms oder der elektrischen Erregerspannung bildet. Auf diese Art und Weise wird mittels der Hilfsregelungseinrichtung die Kennlinie der Ermittlungseinrichtung fein abgeglichen und damit ein optimierter Wert des Erregersignals bereitgestellt.

Eine weitere bevorzugte Ausführungsform der Spannungserzeugungsvorrichtung zeichnet sich dadurch aus, dass die Generatoreinrichtung mittels einer Verbrennungskraftmaschine antreibbar ist, wobei eine Drehzahl der Generatoreinrichtung mittels der Verbrennungskraftmaschine jeweils definiert einstellbar ist. Auf diese Weise werden auf einfache Weise unterschiedliche Drehzahlen für die Generatoreinrichtung bereitgestellt.

Eine weitere bevorzugte Ausführungsform der regelbaren Spannungserzeugungsvorrichtung zeichnet sich dadurch aus, dass das Einstellen der Nennlast durch einen Widerstand am Ausgang der Gleichrichtereinrichtung durchführbar ist. Auf diese Weise kann vorteilhaft ein Bremswiderstand eines Fahrmotors genutzt werden und erfordert dadurch wenig Zusatzaufwand zum Anfahren eines definierten Arbeitspunkts der Spannungserzeugungsvorrichtung.

Als besonders vorteilhaft wird bei der Erfindung angesehen, dass es mit einfachen technischen Mitteln möglich ist, Lastschwankungen der Spannungserzeugungsvorrichtung auf einfache Weise auszuregeln. Dazu müssen vorteilhaft keine aufwendigen Zusatzeinrichtungen benutzt werden, sondern es genügt zum Ermitteln von elektrischen Ansteuersignalen (Erregerstrom oder Erregerspannung) ein messtechnisches Anfahren von definierten Arbeitspunkten und ein messtechnisches Ermitteln von Messwerten zur Ermittlung einer Kennlinie einer Ermittlungseinrichtung der Regelungsvorrichtung.

Die oben beschriebene Erfindung wird im Zusammenhang mit den folgenden Figuren näher erläutert.

FIG 1      zeigt in prinzipieller Weise ein Blockschaltbild einer vorgeschlagenen Spannungserzeugungsvorrichtung;

FIG 2      ein prinzipielles Schema zur Ermittlung des elektrischen Erregerstroms gemäß dem vorgeschlagenen Prinzip;

FIG 3      zeigt in prinzipieller Weise eine physikalische Bedeutung einer Funktionsweise des vorgeschlagenen Verfahrens;

FIG 4      zeigt verschiedene Messwerte einer Ausführungsform der vorgeschlagenen regelbaren Spannungserzeugungsvorrichtung; und

FIG 5      zeigt einen prinzipiellen Ablauf einer Ausführungsform des erfindungsgemäßen Verfahrens.

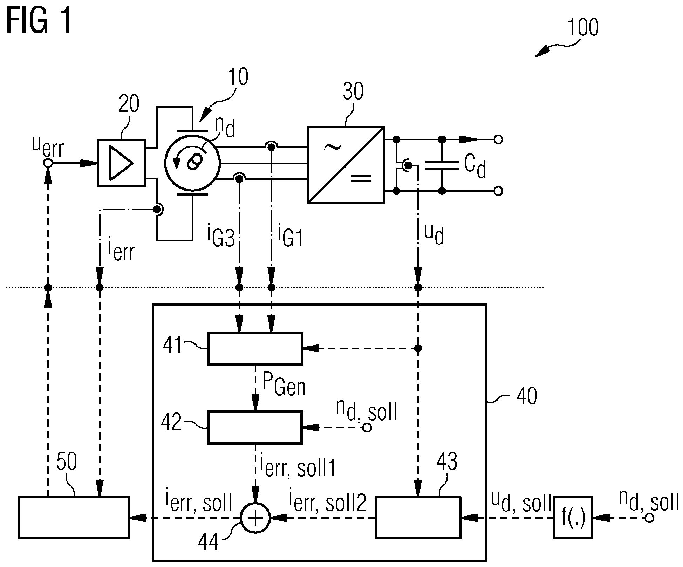

FIG 1 zeigt ein prinzipielles Blockschaltbild einer Ausführungsform einer regelbaren Spannungserzeugungsvorrichtung 100. Man erkennt eine fremderregte Generatoreinrichtung 10, (z.B. in Form eines fremderregten Synchrongenerators), die mittels einer Erregereinrichtung 20 elektrisch angeregt wird. Eine dreiphasige elektrische Ausgangsspannung der Generatoreinrichtung 10 wird einer Gleichrichtereinrichtung 30, vorzugsweise in Form einer B6-Brückenschaltung zugeführt. Am Ausgang der Gleichrichtereinrichtung 30 steht an einem Zwischenkreiskondensator $C_d$ eine gleichgerichtete elektrische Ausgangsspannung $u_d$ zur Verfügung, an die eine Last (nicht dargestellt) anschließbar ist, beispielsweise in Form eines elektrischen Fahrmotors einer Lokomotive.

Im unteren Abschnitt von FIG 1 ist eine Regelungsvorrichtung 40, 50 erkennbar, mittels der für die Erregereinrichtung 20 eine elektrische Erregerspannung $u_{err}$ bereitgestellt wird. Man erkennt eine Spannungsregelungseinrichtung 40, die funktional mit einer Stromregelungseinrichtung 50 verschaltet ist. An eine Berechnungseinrichtung 41 der Spannungsregelungseinrichtung 40 werden gemessene Stromwerte $i_{G1}$, $i_{G3}$ der Generatoreinrichtung 10 sowie die elektrische Ausgangsspannung $u_d$ der Gleichrichtereinrichtung 30 zugeführt. Mittels der Berechnungseinrichtung 41 wird eine Leistung $P_{Gen}$ der Generatoreinrichtung 10 rechnerisch ermittelt. Eine Ausgangsgröße des gemessenen Leistungswerts wird einer Ermittlungseinrichtung 42 zugeführt, an die auch ein Drehzahlsollwert $n_{d,Soll}$ der Generatoreinrichtung 10 zugeführt wird. Die Ermittlungseinrichtung 42 ermittelt auf eine weiter unten näher definiert Art und Weise einen ersten Sollwert des Erregerstroms $i_{err,Soll1}$ und führt diesen einem Summationspunkt 44 zu.

An den Summationspunkt 44 wird weiterhin ein zweiter Sollwert $i_{,err,Soll2}$ des Erregerstroms zugeführt. Dieser ist eine Ausgangsgröße einer Hilfsregelungseinrichtung 43, die den genannten zweiten Sollwert $i_{,err,Soll2}$ aus der elektrischen Ausgangsspannung $u_d$ der Gleichrichtereinrichtung 30 und einem Sollwert der Ausgangsspannung $u_{d,Soll}$ der Gleichrichtereinrichtung 30 aus einem definierten Abbild eines Drehzahlsollwerts $n_{d,Soll}$ ermittelt.

Auf diese Weise wird von der Spannungsregelungseinrichtung 40 ein Ausgangssignal $i_{err,Soll}$ an die Stromregelungseinrichtung 50 zugeführt, die daraus ein elektrisches Ansteuersignal in Form der elektrischen Erregerspannung $u_{,err}$ für die Erregereinrichtung 20 bildet.

Herkömmlicherweise sind zur Realisierung der Ermittlungseinrichtung 42 aufwendige Simulationen erforderlich, die auch Kenntnisse der Generatoreinrichtung 10 erfordern sowie diverse Bauteilparameter von diversen Bauteilen der gesamten Spannungsregelungsvorrichtung 100. Zu diesem Zweck wird herkömmlich ein dynamisches Modell der obigen Regelstrecke anhand von komplexen, nichtlinearen Differenzialgleichungen erstellt. Parameter des Modells ergeben sich nach Zwischenrechnungen aus Angaben des Herstellers und der Systemauslegung. Erforderlich sind Simulationen der Generatorgleichungen mit einer Simulationssoftware an verschiedenen unspezifizierten Arbeitspunkten bis zum jeweils eingeschwungenen Zustand. Dabei stellt die Hilfsregelungseinrichtung 43 sicher, dass die Beziehung $u_{d,ist} = u_{d,Soll}$ erfüllt ist. Für jeden Arbeitspunkt AP ergibt sich daraus eine Stützstelle gemäß folgender Beziehung:

$$i_{err} = f(P_{Gen},\ n_{d,Soll}) \qquad (1)$$

$i_{err}$ ...     Erregerstrom
$P_{Gen}$ ...    Generatorleistung

$n_{d,Soll}$ ...    Drehzahlsollwert

Anschließend werden Parameter einer Fläche zweiter Ordnung:

$$i_{Fläche} = x_0 + x_{p1}*P_{Gen} + x_{p2}*P_{Gen}^2 + x_{n1}*n_{d,Soll} + x_{n2} * n_{d,Soll2} \quad (2)$$

derart optimiert, dass der elektrische Erregerstrom an den Arbeitspunkten $i_{Fläche}$ möglichst wenig von dem aus der Simulation berechneten Erregerstrom $i_{err}$ im Arbeitspunkt abweicht.

Die erläuterte Flächengleichung von Gleichung (2) und die zugehörigen Parameter sind herkömmlich in einer Steuerungssoftware implementiert.

Eine Kennlinie der Ermittlungseinrichtung 42 wird auf eine einfache Art und Weise messdatenbasiert ermittelt.

Zu diesem Zweck ist vorgesehen, dass die Spannungserzeugungsvorrichtung 100 in eine definierte, geringe Anzahl von Arbeitspunkten zu fahren ist. Beispielsweise genügt es, die Spannungserzeugungsvorrichtung 100 in acht bis zehn Arbeitspunkten anzufahren, wobei in jedem Arbeitspunkt jeweils ein Messwert eines Erregerstroms $i_{err}$ abhängig von einer definierten Drehzahl $n_d$ und einer definierten Generatorlast $P_{Gen}$ aufgenommen wird. Die Arbeitspunkte umfassen dabei einen Drehzahlbereich im Bereich von ca. 600 bis ca. 1.800 U/min der Generatoreinrichtung 10, wobei wenigstens zwei unterschiedliche Drehzahlen an den Rändern des Gesamtbereichs angefahren werden.

Ein derart ermittelter Messwert des Erregerstroms kann in die Regelungsvorrichtung als Parameter eingetragen werden, wodurch die Ermittlungseinrichtung 42 auf einfache Weise definiert ist.

Vorzugsweise sind M Arbeitspunkte durch Einstellen von definierten Drehzahl der Generatoreinrichtung 10 (z.B. mittels eines die Generatoreinrichtung 10 antreibenden Dieselaggregats) auf Werte:

$$n_{d,Soll} \text{ für } x \in [0 ... M-1] \quad (3)$$

einzustellen. Dabei stellt die Hilfsregelungseinrichtung 43 sicher, dass gilt:

$$u_{d,ist} = u_{d,Soll} \quad (4)$$

mit:

$u_{d,ist}$ ...    Istwert der elektrischen Zwischenkreisspannung
$u_{d,Soll}$ ...    Sollwert der elektrischen Zwischenkreisspannung

Jeweils in einem stationären Zustand wird der elektrische Erregerstrom $i_{err}$ gemessen, einmal im lastlosen Fall (Leerlauf) und einmal bei Nennlast. Zum Einstellen der Nennlast wird am Ausgang der Gleichrichtereinrichtung 30 ein einstellbarer Ohm'scher Widerstand (nicht dargestellt), beispielsweise in Form eines im Regulärbetrieb der Spannungserzeugungsvorrichtung 100 eingesetzten Bremswiderstands eines Fahrmotors geeignet eingestellt.

Dadurch ergeben sich dadurch 2M Parametersätze bzw. Wertetripel bzw. Zahlentripel t, die direkt in die Ermittlungseinrichtung 42 eingetragen werden können.

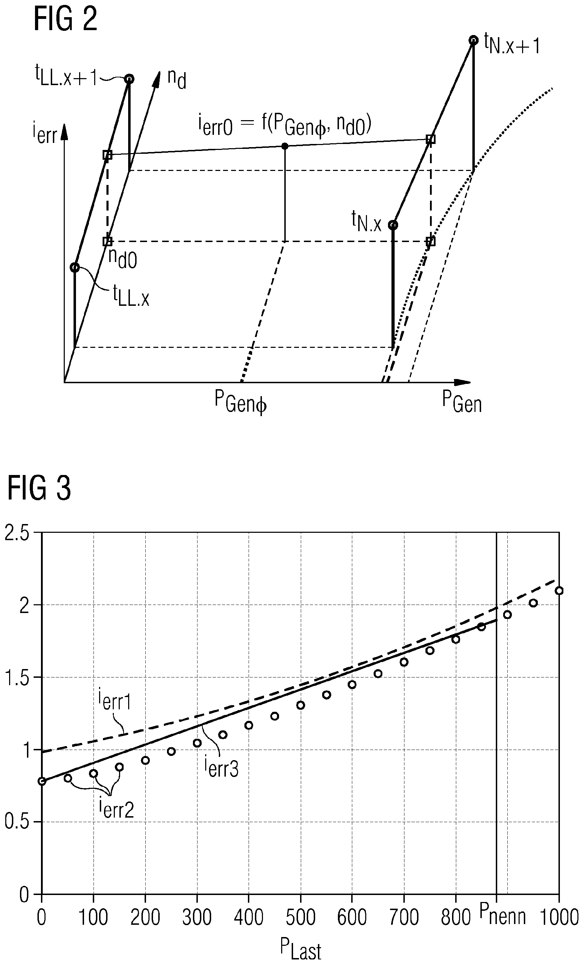

FIG 2 zeigt eine prinzipielle Darstellung des vorgehend erläuterten Ermittlungsprinzips des elektrischen Erregerstroms $i_{err}$. Erkennbar ist ein dreiachsiges kartesisches Koordinatensystem mit den Achsen Generatorleistung $P_{Gen}$, elektrischer Erregerstrom $i_{err}$ und Drehzahl $n_d$.

Man erkennt, dass jeweils für die Werte Leerlauf und Nennlast Wertetripel t für die genannten Werte ermittelt werden, wodurch sich jeweils vier der genannten Wertetripel t ergeben, wobei sich pro Wertetripel t ein elektrischer Erregerstrom in Abhängigkeit von einer definierten Leistung und einer definierten Drehzahl der Generatoreinrichtung 10 ergibt. Der erste Sollwert des elektrischen Erregerstroms $i_{err,Soll1}$ wird durch eine lineare Interpolation aus vier benachbarten, ermittelten Wertetripeln $t_{LL.x}$, $t_{LL.x+1}$, $t_{N.x}$, $t_{N.x+1}$ ermittelt, mit den Wertetripel:

$t_{LL.x}$ ...    $n_{d,soll.x}$, $i_{err,LL.x}$, $P_{Gen}$ in einem Arbeitspunkt X bei Leerlauf

$t_{LL.x+1}$ ...    $n_{d,soll.x+1}$, $i_{err,LL.x+1}$, $P_{Gen}$ in einem Arbeitspunkt X + 1 bei Leerlauf

$t_{N.x}$ ...    $n_{d,soll.x}$, $i_{err,N.x}$, $P_{Gen}$ in einem Arbeitspunkt X bei Nennlast

$t_{N.x+1}$ ...    $n_{d,soll.x+1}$, $i_{err,N.x+1}$, $P_{Gen}$ in einem Arbeitspunkt X + 1 bei Nennlast

Im Ergebnis repräsentiert die Gesamtheit der Wertetripel t somit eine Fläche im Raum, wobei jeder Punkt der Fläche einen ersten Sollwert des elektrischen Erregerstroms $i_{err}$ in Abhängigkeit von einer definierten Generatorleistung und einer definierten Drehzahl repräsentiert.

Auf diese Weise wird eine mathematische Funktion realisiert, die einen Leistungswert und einen Drehzahlwert der Spannungserzeugungsvorrichtung 100 auf einen Wert des elektrischen Erregerstroms $i_{err}$ für die Erregereinrichtung 20 der Generatoreinrichtung 10 abbildet. Eine Höhe eines Flächenpunkts bzw. eine Stützstelle der Fläche im Raum entspricht dabei einem spezifischen Wert eines ersten Sollwerts des elektrischen Erregerstroms $i_{err,Soll1}$. Die Drehzahl der Generatoreinrichtung 10 wird dabei von einer Steuerungseinrichtung (nicht dargestellt) der Generatoreinrichtung 10 gesteuert, wobei beispielsweise eine Dieseleinspritzmenge für ein Dieselaggregat entsprechend dosiert wird.

Auf diese Weise kann eine Kennlinie für die Ermittlungseinrichtung 42 auf einfache Weise bereitgestellt werden, wobei sich zugehörige Interpolationsalgorithmen auf einfache Weise in die Regelungsvorrichtung implementieren lassen, vorzugsweise in Form einer Software mit geeigneten Programmcodemitteln.

FIG 3 zeigt ein Diagramm mit einem physikalischen Hintergrund zur Erfindung. Die nachfolgenden Erläuterungen beziehen sich auf eine feste Generatordrehzahl.

FIG 3 zeigt drei Verläufe des elektrischen Erregerstroms $i_{err1}$, $i_{err2}$, $i_{err3}$, welcher bei einer bestimmten Last erforderlich ist, um die elektrische Zwischenkreisspannung $u_d$ auf einem Sollwert zu halten. Der Verlauf $i_{err1}$ wird herkömmlich mittels einer Modellbildung und einer anschließenden Simulation der Generatoreinrichtung 10 erhalten.

$i_{err2}$ repräsentiert Messpunkte des elektrischen Erregerstroms mit derselben Generatoreinrichtung 10, der aufwendig an vielen Arbeitspunkten vermessen wurde, wobei sich die gezeigten Zusammenhänge zwischen Last und Erregerstrom ergeben.

$i_{err3}$ zeigt eine Kennlinie für eine spezifische Drehzahl. Die Generatoreinrichtung 10 wird bei der Inbetriebnahme im Rahmen des sogenannten "SelfLoadTests" ohnehin mit der Nennleistung $P_N$ belastet.

Man erkennt also, dass die vorgeschlagene Gerade gemäß $i_{err3}$ ein ausreichend genaues Abbild der realen physikalischen Verhältnisse gemäß $i_{err2}$ repräsentiert. Dabei ist zu erkennen, dass die per Interpolation erhaltene Gerade des elektrischen Erregerstroms gemäß $i_{err3}$ die Realität sogar noch besser widerspiegelt, als die herkömmlich aufwendig bestimmte parabelförmige Kennlinie des Erregerstroms gemäß $i_{err1}$.

Die in FIG 3 dargestellten physikalischen Zusammenhänge zeigen also, dass eine lineare Interpolation des benötigten elektrischen Erregerstroms $i_{err}$ zwischen Volllast und Leerlauf zu einer höheren Genauigkeit führt, als die herkömmlich aufwendig durchgeführte Modellbildung mit Simulationen. Die lineare Interpolation des Erregerstroms $i_{err3}$ weicht vom realen (gemessenen) Wert für keine Belastung mehr als ca. 10% ab. Vorteilhaft zeigt sich das beschriebene Verhalten bei allen gemessenen Drehzahlen.

Die Lastwechsel der Generatoreinrichtung 10 zwischen Leerlauf und Nennlast müssen "schnell", d.h. mit einer Frequenz im kHz-Bereich kompensiert werden, da die genannten Lastwechsel durch elektrische Zeitkonstanten repräsentiert sind. Dies ist mit der Kennlinie sichergestellt.

Die Hilfsregelungseinrichtung 43 reicht dafür nicht aus. Demgegenüber sind die Drehzahländerungen der Generatoreinrichtung 10 vergleichsweise "langsam", d.h. mit einer Änderungsfrequenz von ca. 10 Hz, da diese durch eine mechanische Zeitkonstante repräsentiert sind. Ungenauigkeiten bei der rechnerischen Ermittlung des elektrischen Erregerstroms $i_{err}$ zwischen den Drehzahlstützstellen kann die überlagerte Hilfsregelungseinrichtung 43 aufgrund ihrer Dynamik daher leicht ausgleichen. Die Hilfsregelungseinrichtung 43 ist somit schnell genug, um die eher langsamen Drehzahländerungen dynamisch nachzuführen bzw. auszuregeln.

Vorteilhaft kann mittels der Erfindung ein Betrieb einer Spannungserzeugungsvorrichtung realisiert werden, bei der die Generatoreinrichtung 10 in ihren technischen Eigenschaften unbekannt ist und die herkömmlich erforderlichen Herstellerangaben nicht oder nicht mit angemessenem Aufwand erhältlich sind.

In einem Beispiel außerhalb der Erfindung kann anstelle des elektrischen Erregerstroms $i_{err}$ auch die elektrische Erregerspannung $u_{err}$ mittels einer Kennlinie der Ermittlungseinrichtung 42 berechnet werden.

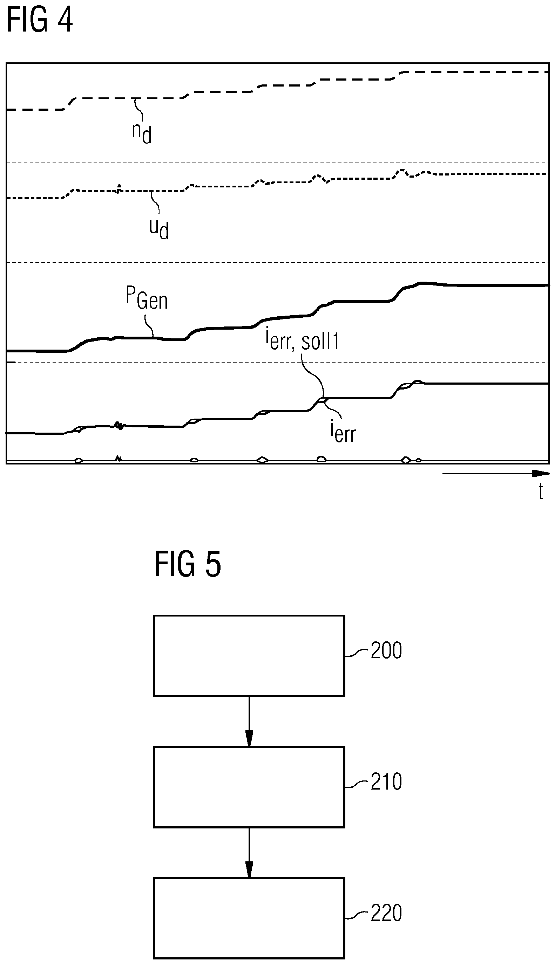

FIG 4 zeigt mehrere zeitliche Verläufe mit Messergebnissen nach Anwendung des vorgeschlagenen Verfahrens.

Der oberste Verlauf von FIG 4 zeigt einen zeitlichen Verlauf der Drehzahl $n_d$ der Generatoreinrichtung 10.

Der zweite Verlauf von oben in FIG 4 zeigt einen zeitlichen Verlauf der elektrischen Zwischenkreisspannung $u_d$.

Der dritte Verlauf von oben in FIG 4 zeigt einen zeitlichen Verlauf der Generatorleistung $P_{Gen}$.

Der mittels Kennlinie der Ermittlungseinrichtung 42 ermittelte erste Sollwert des Erregerstroms $i_{err,Soll1}$ im untersten Verlauf von FIG 4 entspricht dem erforderlichen stationären Sollwert des elektrischen Erregerstroms $i_{err,Soll}$ derart gut, dass ein überlagerter Regler in Form der Hilfsregelungseinrichtung 43 ("Feedback-Regler") kaum zu korrigieren braucht. Vorteilhaft ist die Anzahl der zur Darstellung der Ermittlungseinrichtung 42 erforderlichen Parameter sehr gering, wobei die Messung in Arbeitspunkten erfolgt, die ohnehin bei der Inbetriebsetzung der Spannungserzeugungsvorrichtung 100 angefahren werden. Im Ergebnis ist dadurch kein Engineering vor oder während eines Inbetriebsetzungs-Projekts aus dem Büro erforderlich und es sind vorteilhaft auch keine Angaben (z.B. vom Hersteller) über die Generatoreinrichtung 10 erforderlich.

Vorteilhaft brauchen dadurch notwendiges Expertenwissen und Softwarelizenzen nicht vorgehalten zu werden. Grundsätzlich kann daher eine völlig unbekannte Generatoreinrichtung 10 in Betrieb genommen werden.

Die gemessenen Parameter können ohne Zwischenrechnungen direkt in die Software übernommen werden.

Die Parameter haben eine physikalische Bedeutung und können daher vor Ort eventuellen Erfordernissen angepasst werden.

Eine Steuerungssoftware wird verschlankt und ist leichter les- und wartbar.

FIG 5 zeigt ein prinzipielles Ablaufdiagramm einer Ausführungsform des erfindungsgemäßen Verfahrens zum Betreiben einer Spannungserzeugungsvorrichtung 100 mit einer mechanisch angetriebenen, fremderregten Generatoreinrichtung 10 und einer mit der Generatoreinrichtung 10 verschalteten Gleichrichtereinrichtung 30.

In einem Schritt 200 wird ein Generieren einer gleichgerichteten elektrischen Ausgangsspannung der Generatoreinrichtung 10 durchgeführt.

In einem Schritt 210 wird ein messtechnisches Erfassen eines Erregersignals der Generatoreinrichtung 10 bei definierten Randbedingungen durchgeführt.

In einem Schritt 220 wird ein mathematisches Ermitteln des elektrischen Erregersignals der Generatoreinrichtung 10 durch eine definierte Interpolation aus den messtechnisch ermittelten Erregersignalen durchgeführt.

Zusammenfassend wird mit der vorliegenden Erfindung eine messdatenbasierte Realisierung einer regelbaren, elektrischen Spannungsquelle mit einem fremderregten Synchrongenerator und einer Gleichrichterbrücke erreicht, die auf einfache Weise vorteilhaft eine hochdynamische Ausregelung von unterschiedlichen Lasten ermöglicht.

**Patentansprüche**

1. Geregelte Spannungserzeugungsvorrichtung (100), aufweisend:

    - eine mechanisch angetriebene, fremderregte Generatoreinrichtung (10),
    - eine Erregereinrichtung (20), mit der die Generatoreinrichtung (10) elektrisch angeregt wird,
    - eine Gleichrichtereinrichtung (30), mit der eine elektrische Ausgangsspannung der Generatoreinrichtung (10) gleichgerichtet wird,
    - eine Regelungsvorrichtung, mittels der eine elektrische Erregerspannung ($u_{err}$) für die Erregereinrichtung (20) bereitgestellt wird, wobei die Regelungsvorrichtung eine Spannungsregelungseinrichtung (40) und eine Stromregelungseinrichtung (50) aufweist und die Spannungsregelungseinrichtung (40) funktional mit der Stromregelungseinrichtung (50) verschaltet ist,

    **gekennzeichnet dadurch dass** die Spannungsregelungseinrichtung (40) eine Berechnungseinrichtung (41) aufweist, der gemessene Stromwerte ($i_{G1}$, $i_{G3}$) von Ausgangsströmen der Generatoreinrichtung (10) und die elektrische Ausgangsspannung ($u_d$) der Gleichrichtereinrichtung (30) zugeführt sind, wobei mittels der Berechnungseinrichtung (41) eine Leistung ($P_{Gen}$) der Generatoreinrichtung (10) rechnerisch ermittelt wird, die als Ausgangsgröße eines gemessenen Leistungswerts einer Ermittlungseinrichtung (42) zugeführt wird,

    - wobei die Spannungsregelungseinrichtung (40) die Ermittlungseinrichtung (42) aufweist, an die auch ein Drehzahlsollwert ($n_{d,Soll}$) der Generatoreinrichtung (10) zugeführt ist, wobei mittels der Ermittlungseinrichtung (42) ein erster Sollwert des Erregerstroms ($i_{err,Soll1}$) ermittelt und einem Summationspunkt (44) zugeführt wird,
    - wobei die Spannungsregelungseinrichtung (40) den Summationspunkt (44) sowie eine Hilfsregelungseinrichtung (43) aufweist, wobei an den Summationspunkt (44) weiterhin ein zweiter Sollwert ($i_{,err,Soll2}$) des Erregerstroms zugeführt wird, der eine Ausgangsgröße der Hilfsregelungseinrichtung (43) ist, wobei die Hilfsregelungseinrichtung (43) den zweiten Sollwert ($i_{err,Soll2}$) aus der elektrischen Ausgangsspannung ($u_d$) der Gleichrichtereinrichtung (30) und einem Sollwert der Ausgangsspannung ($u_{d,Soll}$) der Gleichrichtereinrichtung (30) aus einem definierten Abbild eines Drehzahlsollwerts ($n_{d,Soll}$) ermittelt,
    - wobei der Summationspunkt (44) durch Summation ein Ausgangssignal ($i_{err,Soll}$) der Spannungsregelungseinrichtung (40) bildet, das der Stromregelungseinrichtung (50) zugeführt ist, wobei die Stromregelungseinrichtung (50) daraus ein elektrisches Ansteuersignal in Form der elektrischen Erregerspannung ($u_{err}$) für die Erregereinrichtung (20) bildet,
    - wobei die Generatoreinrichtung (10) bei wenigstens zwei definierten Drehzahlen jeweils bei Leerlauf und bei Nennlast betrieben ist, wobei ein Wert des elektrischen Erregerstroms ($i_{err}$) aus einer linearen Interpolation von vier dadurch erhaltenen Wertetripel ermittelt wird, wobei ein Wertetripel aus Erregerstrom, Drehzahl und Last besteht.

2. Spannungserzeugungsvorrichtung (100) nach Anspruch 1, bei der zur Ermittlung der Wertetripel des elektrischen

Erregerstroms ($i_{err}$) der Drehzahlbereich der Generatoreinrichtung (10) in definierten Intervallen durchfahren wird.

3. Spannungserzeugungsvorrichtung (100) nach einem der vorhergehenden Ansprüche, bei der die Generatoreinrichtung (10) mittels einer Verbrennungskraftmaschine angetrieben ist, wobei eine Drehzahl der Generatoreinrichtung (10) mittels der Verbrennungskraftmaschine jeweils definiert einstellbar ist.

4. Spannungserzeugungsvorrichtung (100) nach einem der vorhergehenden Ansprüche, bei der das Einstellen der Nennlast durch einen Widerstand am Ausgang der Gleichrichtereinrichtung (30) durchgeführt ist.

**Claims**

1. Regulated voltage generating apparatus (100), comprising:

   - a mechanically driven, separately excited generator device (10),
   - an exciter device (20), with which the generator device (10) is electrically excited,
   - a rectifier device (30), with which an output voltage of the generator device (10) is rectified,
   - a regulating apparatus, by means of which an excitation voltage ($u_{err}$) is provided for the exciter device (20), wherein the regulating apparatus comprises a voltage regulating device (40) and a current regulating device (50) and the voltage regulating device (40) is functionally interconnected with the current regulating device (50),

   **characterized in that**
   the voltage regulating device (40) comprises a calculation device (41), which is supplied with measured current values ($i_{G1}$, $i_{G3}$) of output currents of the generator device (10) and with the output voltage ($u_d$) of the rectifier device (30), wherein a power ($P_{Gen}$) of the generator device (10) is ascertained by calculation by means of the calculation device (41), said power being supplied to an ascertainment device (42) as output variable of a measured power value,

   - wherein the voltage regulating device (40) comprises the ascertainment device (42), which is also supplied with a rotational speed setpoint value ($n_{d,Soll}$) of the generator device (10), wherein a first setpoint value of the excitation current ($i_{err,Soll1}$) is ascertained by means of the ascertainment device (42) and supplied to a summing point (44),
   - wherein the voltage regulating device (40) comprises the summing point (44) and an auxiliary regulating device (43), wherein a second setpoint value ($i_{,err,Soll2}$) of the excitation current is also supplied to the summing point (44), said second setpoint value being an output variable of the auxiliary regulating device (43), wherein the auxiliary regulating device (43) ascertains the second setpoint value ($i_{,err,Soll2}$) from the output voltage ($u_d$) of the rectifier device (30) and a setpoint value of the output voltage ($u_{d,Soll}$) of the rectifier device (30) from a defined mapping of a rotational speed setpoint value ($n_{d,Soll}$),
   - wherein the summing point (44) forms an output signal ($i_{err,Soll}$) of the voltage regulating device (40) by summation, said output signal being supplied to the current regulating device (50), wherein the current regulating device (50) forms an electric actuation signal in the form of the excitation voltage ($u_{,err}$) for the exciter device (20) therefrom,
   - wherein the generator device (10) is operated at at least two defined rotational speeds, respectively when idling and at rated load, wherein a value of the electric excitation current ($i_{,err}$) is ascertained from a linear interpolation of four value triples obtained thereby, wherein a value triple consists of excitation current, rotational speed and load.

2. Voltage generating apparatus (100) according to Claim 1, wherein the rotational speed range of the generator device (10) is traversed at defined intervals for the purposes of ascertaining the value triples of the electric excitation current ($i_{err}$).

3. Voltage generating apparatus (100) according to either one of the preceding claims, wherein the generator device (10) is driven by means of an internal combustion engine, wherein a rotational speed of the generator device (10) can be set in defined fashion in each case by means of the internal combustion engine.

4. Voltage generating apparatus (100) according to any one of the preceding claims, wherein the rated load is set by a resistor at the output of the rectifier device (30).

**Revendications**

1. Dispositif de génération de tension régulée (100), comprenant :

   - un moyen générateur (10) à excitation séparée, entraîné mécaniquement,
   - un moyen d'excitation (20), par lequel le moyen générateur (10) est excité électriquement,
   - un moyen redresseur (30), par lequel une tension de sortie électrique du moyen générateur (10) est redressée,
   - un dispositif de régulation, au moyen duquel une tension d'excitation électrique ($u_{err}$) est fournie pour le moyen d'excitation (20), dans lequel le dispositif de régulation comprend un moyen de régulation de tension (40) et un moyen de régulation de courant (50) et le moyen de régulation de tension (40) est connecté fonctionnellement au moyen de régulation de courant (50),
   **caractérisé en ce que**
   le moyen de régulation de tension (40) comprend un moyen de calcul (41), auquel sont appliquées des valeurs de courant mesurées ($i_{G1}$, $i_{G3}$) issues de courants de sortie du moyen générateur (10) et la tension de sortie électrique ($u_d$) du moyen redresseur (30), dans lequel, au moyen du moyen de calcul (41), une puissance ($P_{Gen}$) du moyen générateur (10) est déterminée par calcul, laquelle puissance est appliquée en tant que grandeur de sortie d'une valeur de puissance mesurée à un moyen de détermination (42),
   - dans lequel le moyen de régulation de tension (40) comprend le moyen de détermination (42), au niveau duquel est également appliquée une valeur théorique de vitesse de rotation ($n_{d,Soll}$) du moyen générateur (10), dans lequel, au moyen du moyen de détermination (42), une première valeur théorique du courant d'excitation ($i_{err,Soll1}$) est déterminée et appliquée à un point de sommation (44),
   - dans lequel le moyen de régulation de tension (40) comprend le point de sommation (44) ainsi qu'un moyen de régulation auxiliaire (43), dans lequel, au niveau du point de sommation (44), une deuxième valeur théorique ($i_{err,Soll2}$) du courant d'excitation est en outre appliquée, laquelle valeur est une grandeur de sortie du moyen de régulation auxiliaire (43), dans lequel le moyen de régulation auxiliaire (43) détermine la deuxième valeur théorique ($i_{err,Soll2}$) à partir de la tension de sortie électrique ($u_d$) du moyen redresseur (30) et d'une valeur théorique de la tension de sortie ($u_{d,Soll}$) du moyen redresseur (30) à partir d'une représentation définie d'une valeur théorique de vitesse de rotation ($n_{d,Soll}$),
   - dans lequel le point de sommation (44) forme par sommation un signal de sortie ($i_{err,Soll}$) du moyen de régulation de tension (40), lequel signal est appliqué au moyen de régulation de courant (50), dans lequel le moyen de régulation de courant (50) forme à partir de celui-ci un signal de commande électrique sous la forme de la tension d'excitation électrique ($u_{,err}$) pour le moyen d'excitation (20),
   - dans lequel le moyen générateur (10) est mis en fonctionnement à au moins deux vitesses de rotation définies respectivement au point mort et à charge nominale, dans lequel une valeur du courant d'excitation électrique ($i_{err}$) est déterminée à partir d'une interpolation linéaire de quatre triplets de valeurs ainsi obtenues, dans lequel un triplet de valeurs est constitué du courant d'excitation, de la vitesse de rotation et de la charge.

2. Dispositif de génération de tension (100) selon la revendication 1, dans lequel, pour la détermination des triplets de valeurs du courant d'excitation électrique ($i_{err}$), la plage de vitesse de rotation du moyen générateur (10) est traversée en des intervalles définis.

3. Dispositif de génération de tension (100) selon l'une des revendications précédentes, dans lequel le moyen générateur (10) est entraîné au moyen d'un moteur à combustion interne, dans lequel une vitesse de rotation du moyen générateur (10) est réglable de manière respectivement définie au moyen du moteur à combustion interne.

4. Dispositif de génération de tension (100) selon l'une des revendications précédentes, dans lequel le réglage de la charge nominale est effectué grâce à une résistance au niveau de la sortie du moyen redresseur (30).

FIG 1

100

20

10

$n_d$

30

$u_{err}$

$i_{err}$

$i_{G3}$

$i_{G1}$

$u_d$

$C_d$

41

$P_{Gen}$

42

$n_{d, soll}$

40

50

$i_{err, soll}$

$i_{err, soll1}$

$i_{err, soll2}$

43

44

$u_{d, soll}$

f(.)

$n_{d, soll}$

## FIG 2

## FIG 3

# FIG 4

# FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19733221 A1